# EUROPÄISCHE PATENTSCHRIFT

(11) **EP 1 069 026 B1**
(45) Veröffentlichungstag und Bekanntmachung des Hinweises auf die Patenterteilung: **26.07.2006**
(21) Anmeldenummer: 00110992.5
(22) Anmeldetag: 29.05.2000
(51) Int. Cl.: B62D 15/02, B62D 1/16

(54) **Lenkstockmodul mit Lenkwinkelsensor und kompakter Bauweise**
Steering column module with steering angle sensor and compact construction
Module de colonne de direction avec capteur d'angle de braquage et construction compacte

(30) Priorität: 15.07.1999 DE 19933048
(43) Veröffentlichungstag der Anmeldung: 17.01.2001
(73) Patentinhaber: Valeo Schalter und Sensoren GmbH, 74321 Bietigheim-Bissingen (DE)
(72) Erfinder: Papenfuss, Jürgen, 74343 Sachsenheim (DE); Ruetz, Christian, 71636 Ludwigsburg (DE); Vogl, Gregor, 74348 Lauffen a.N. (DE)
(74) Vertreter: Dreiss, Fuhlendorf, Steimle & Becker

(56) Entgegenhaltungen:
- EP-A- 0 763 447
- EP-A- 0 853 022
- DE-A- 19 525 138
- DE-A- 19 859 557

## Beschreibung

Aus der DE 198 59 557 A1 ist eine gattüngsgemäße Signalübertragungskassette mit zwei Auswerteelektroniken bekannt bei der eine erste Auswerteelektronik an einem drehfesten Teil angeordnet ist, während eine zweite Auswerteelektronik an einem drehbaren Teil der Signalübertragungskassette angeordnet ist. Bei dieser Signalübertragungskassette erfolgt die Signalübertragung von einem drehfesten Teil zu einem drehbaren Teil der Signalübertragungskassette induktiv. Dieses Konzept ist relativ aufwändig und fehleranfällig. Da der drehbare Teil der Signalübertragungskassette nur mittelbar über das Lenkrad und die Lenksäule des Fahrzeugs drehbar gelagert ist, kann die Signalübertragungskassette nur in eingebautem Zustand auf ihre Funktion überprüft werden.

Aus der EP 0 763 447 A2 ist ein Lenkstockmodul mit einer Signalübertragungskassette und einem Drehwinkelsensor bekannt. Bei diesem Lenkstockmodul ist der Bauraumbedarf in axialer Richtung relativ hoch.

Der Erfindung liegt daher die Aufgabe zugrunde, ein Lenkstockmodul bereitzustellen, dessen Platzbedarf gering ist und das einfach zu montieren ist. Weiterhin soll das Lenkstockmodul auch außerhalb eines Kraftfahrzeugs funtkionstüchtig sein. Außerdem soll das Lenkstockmodul eine größere Betriebssicherheit bieten und die Zuverlässigkeit der Elektronik verbessert werden.

Diese Aufgabe wird erfindungsgemäß bei einem Lenkstockmodul für Kraftfahrzeuge mit den kennzeichnenden Merkmalen des Anspruchs 1 gelöst.

Da sowohl die Signalübertragungskassette als auch die Codescheibe des Lenkwinkelsensors flach und eben sind, kann durch die Kopplung dieser Bauteile Bauraum, insbesondere in axialer Richtung des Lenkstockmoduls eingespart werden.

Durch die Verlagerung der Codescheibe bleibt - gleiche Außenabmessungen vorausgesetzt - mehr Raum für ein oder zwei Breitbandkabel, welche die Signale und elektrischen Ströme vom Lenkrad zum Kraftfahrzeug und umgekehrt übertragen. Dies ist gerade bei modernen Fahrzeugen, bei denen immer mehr Funktionen vom Lenkrad aus betätigt werden, von großer Bedeutung.

Außerdem ist dieser Vorteil von großer Bedeutung für zukünftige Automobilentwicklungen, da die Vorgaben seitens der Kraftfahrzeughersteller bezüglich des verfügbaren Bauraums immer restriktiver werden. Als weiterer Vorteil ist hervorzuheben, dass die zur Kontaktierung der verschiedenen Baugruppen des Lenkstockmoduls erforderlichen Steckerwege verkürzt werden und somit die Montage vereinfacht und die Möglichkeit von Montagefehlern verringert wird. Dies führt zu einer verbesserten Betriebssicherheit des Lenkstockmoduls und Zuverlässigkeit der Elektronik. Außerdem kann das komplette Lenkstockmodul außerhalb der Kraftfahrzeugs montiert und auf seine Funktionstüchtigkeit geprüft werden.

Dadurch, dass erfindungsgemäß die erste Auswerteelektronik und die zweite Auswerteelektronik auf einer gemeinsamen Leiterplatte angeordnet sind, wird die Herstellung der ersten und der zweiten Auswerteelektronik ebenso wie deren Montage im Lenkstockmodul vereinfacht Außerdem wird die Zuverlässigkeit der Elektronik weiter verbessert.

Bei einer Ausführungsform der Erfindung ist vorgesehen, dass die erste Auswerteelektronik und die zweite Auswerteelektronik zwischen Signalübertragungskassette und Lenkstockschalter angeordnet sind, so dass die Platzersparnis vor allem in dem von dem Lenkrad des Kraftfahrzeugs abgewandten Bereich des Lenkstockmoduls erzielt wird.

Eine Variante sieht vor, dass die erste Auswerteelektronik und die zweite Auswerteelektronik in den Lenkwinkelsensor integriert sind, so dass sich eine weitere Platzersparnis und eine Reduktion der Zahl der Baugruppen einstellt.

Nach einer weiteren Variante ist vorgesehen, dass zwischen Signalübertragungskassette und zweiter Auswerteelektronik eine elektrische Steckverbindung vorhanden ist, so dass mit der Montage auch die elektrische Kontaktierung erfolgt.

Nach einer vorteilhaften Ausgestaltung der Erfindung ist zwischen dem oder den Lenkstockschalter und zweiter Auswerteelektronik je eine elektrische Steckverbindung vorhanden, so dass mit der Montage auch die elektrische Kontaktierung dieser Baugruppen erfolgt.

Bei einer anderen Variante ist der Lenkwinkelsensor räumlich zwischen Signalübertragungskassette und Lenkstockschalter angeordnet, so dass die Steckerwege besonders kurz sind.

Bei einer anderen Variante ist vorgesehen, dass der erste Lenkstockschalter zur Blinkerbetätigung dient, dass der erste Lenkstockschalter eine Blinkerrückstellung aufweist, und dass die Blinkerrückstellung von dem Lenkwinkelsensor steuerbar ist, so dass das Lenkstockmodul vor dem Einbau in das Kraftfahrzueg funktionsfähig ist und es auch vor der Montage geprüft werden kann.

Weitere Vorteile und vorteilhafte Ausgestaltungen der Erfindung sind der nachfolgenden Beschreibung, der Zeichnung und den Ansprüchen entnehmbar.

Ein Ausführungsbeispiel des Gegenstands der Erfindung ist in der Zeichnung dargestellt und im folgenden näher beschrieben.

Es zeigen:
- Fig. 1:: ein erfindungsgemäßes Lenkstockmodul in Explosionsdarstellung;
- Fig. 2:: eine Ausführungsform eines erfindungsgemäßen Lenkwinkelsensors in Explosionsdarstellung;
- Fig. 3:: eine weitere Ausführungsform eines erfindungsgemäßen Lenkwinkelsensors in Explosionsdarstellung;
- Fig. 4:: das Zusammenwirken von Lenkwinkelsensor und Signalübertragungskassette in Explosionsdarstellung und
- Fig. 5:: das Zusammenwirken von Lenkwinkelsensor und Lenkwinkelsensor in Explosionsdarstellung.

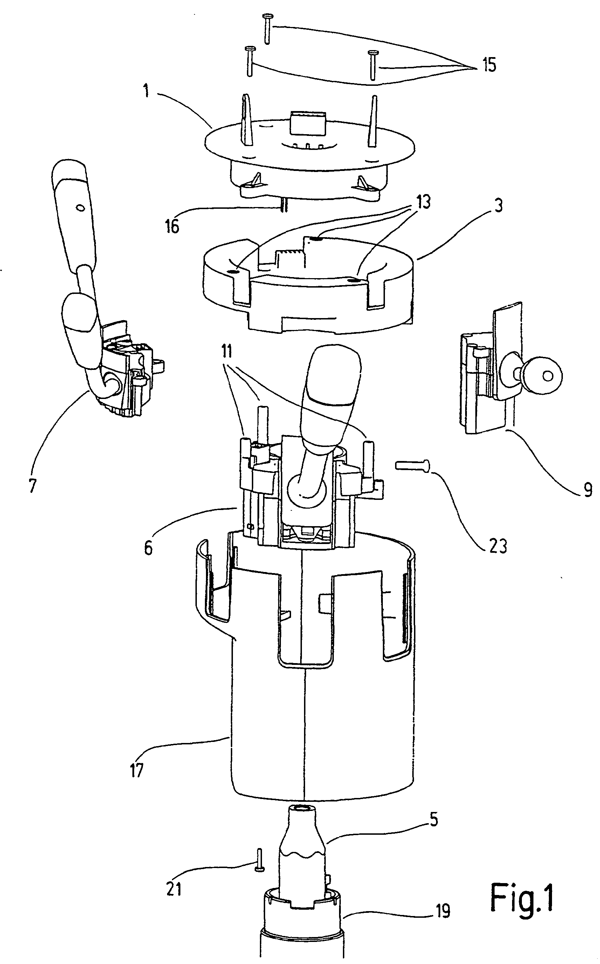

In Fig. 1 ist ein erfindungsgemäßes Lenkstockmodul in Explosionsdarstellung gezeigt. Eine Signalübertragungskassette 1 dient der Übertragung elektrischer Signale von einem nicht dargestellten Lenkrad zum Lenkstockmodul und von dort in das Bordnetz des Kraftfahrzeugs. Die Signalübertragungskassette 1 weist unter anderem ein relativ zum Lenkstockmodul feststehendes Teil und ein sich mit dem Lenkrad drehendes Teil auf. In der Signalübertragungskassette 1 befindet sich ein nicht dargestelltes Breitbandkabel, welches beipsielsweise als Wickelfeder ausgestaltet ist. Über dieses Breitbandkabel werden Informationen, bzw. elektrische Ströme vom Lenkrad zum Kraftfahrzeug und umgekehrt übertragen. Bei modernen Kraftfahrzeugen können u. a. Hupe, Airbag und die Wahl einer Schaltstufe vom Lenkrad aus betätigt werden.

Unterhalb der Signalübertragungskassette 1 ist ein Lenkwinkelsensor 3 dargestellt. Der Lenkwinkelsensor 3 ermittelt beispielsweise durch optische Abtastung einer nicht dargestellten Codescheibe den Lenkwinkel einer Lenksäule 5 und damit auch die Stellung der gelenkten Räder. Die Lenkwinkeldaten können mittels einer nicht dargestellten ersten Auswerteelektronik in Low- oder High-Speed-CAN-Bus-Daten kodiert und dem Kraftfahrzeug gesendet werden. Dort können sie beispielsweise als Eingangsgröße für ein Fahrstabilitätsprogramm verwandt werden.

Ein erster Lenkstockschalter 6 dient beispielsweise zur Betätigung der Fahrtrichtungsanzeige, des Lichts und der Wischeranlage. Darüber hinaus ist der erste Lenkstockschalter 6 Träger des Lenkstockmoduls; d. h. mit ihm sind die übrigen Komponenten des Lenkstockmoduls verbunden. Dies geschieht, indem ein zweiter Lenkstockschalter 7 und ein dritter Lenkstockschalter 9 über als zylindrische Stifte ausgeführte Führungen 11 von oben aufgesteckt werden. Anschließend wird der Lenkwinkelsensor 3 auf die Führungen 11 aufgeschoben. Zu diesem Zweck weist der Lenkwinkelsensor 3 Bohrungen 13 auf, die bezüglich Durchmesser und Abstand den Führungen 11 entsprechen. Schließlich wird die Signalübertragungskassette 1 aufgesteckt und das Lenkstockmodul fixiert, indem drei Schrauben 15 in nicht dargestellte Gewinde in den Führungen 11 gedreht werden. Die drei Schrauben 15 gehen durch entsprechende Bohrungen in der Signalübertragungskassette 1 und dem Lenkwinkelsensor 3.

Eine Verkleidung 17 schützt das Lenkstockmodul vor äußeren Einflüssen wie beispielsweise Staub und gibt dem Lenkstockmodul ein ansprechendes Äußeres. Darüberhinaus verkleidet es auch die Lenksäule 5 und ein Mantelrohr 19. Die Verkleidung 17 wird von unten auf das Lenkstockmodul gesteckt und mit einer oder mehreren Schrauben 21 mit dem Lenkstockmodul verschraubt. Die Lenksäule 5 ist in dem Mantelrohr 19 gelagert. D. h., dass mit zunehmendem Abstand der Lenksäule 5 vom Mantelrohr 19 der Rundlauffehler der Lenksäule und/oder die Exzentrizität der Lenksäule 5 bezüglich des Mantelrohrs 19 zunehmen.

Der zweite und der dritte Lenkstockschalter 7 und 9 können beispielsweise zur Steuerung der Kraftfahrzeuggeschwindigkeit und für Sonderfunktionen genutzt werden.

Durch die Montage des Lenkwinkelsensors 3 auf die Führungen 11 werden automatisch drei nicht dargestellte Stecker vom Lenkwinkelsensor 3 mit dem entsprechenden Stecker des ersten, zweiten und dritten Lenkstockschalters 6, 7 und 9 kontaktiert. Durch die Montage der Signalübertragungskassettte 1 auf die Führungen 11 wird automatisch auch ein nicht dargestellter Stecker der Signalübertragungskassette 1 mit einem entsprechenden Stecker des Lenkwinkelsensors 3 kontaktiert.

Über die Kontaktierungen zwischen dem Lenkwinkelsensor 3 und den Modulkomponenten Signalübertragungskassette 1, erster, zweiter und dritter Lenkstockschalter 6, 7 und 8 empfängt oder sendet eine räumlich zur ersten Auswerteelektronik benachbart angeordnete, nicht dargestellte zweite Auswerteelektronik Signale. Diese Signale werden von der zweiten Auswerteelektronik in Low-oder High-Speed-CAN-Bus-Daten kodiert oder entkodiert und dem Kraftfahrzeug gesendet oder von ihm empfangen. Vorteilhafterweise werden die Signale, welche die erste Auswerteelektronik sendet oder empfängt, und die Signale, welche die zweite Auswerteelektronik sendet oder empfängt, über eine Schnittstelle zwischen Lenkstockmodul und Kraftfahrzeug gesendet oder empfangen.

Außerdem greift ein in axialer Richtung über die Signalübertragungskassette 1 hinausragender und mit den drehbaren Teil der Signalübertragungskassette 1 verbundener Zapfen 16 in die in Fig. 1 nicht dargestellte Codescheibe des Lenkwinkelsensors 3. Der Zapfen 16 ist auch der Rückstellnocken für die Fahrtrichtungsanzeige-Funktion des ersten Lenkstockschalters 6.

Das Lenkstockmodul wird lösbar im Kraftfahrzeug montiert. Dazu wird das Lenkstockmodul von oben auf das Mantelrohr 19 des Kraftfahrzeugs gesteckt und über eine nicht dargestellte, am ersten Lenkstockschalter 6 angeordnete Befestigungsschelle mit einer Schraube 23 am Mantelrohr 19 befestigt.

Durch die Montage des Lenkstockmoduls im Kraftfahrzeug wird automatisch der nicht dargestellte Stecker vom Lenkstockmodul zum ebenfalls nicht dargestellten entsprechenden Stecker des Kraftfahrzeugs kontaktiert. Dieser Stecker stellt die o. g. Schnittstelle zwischen Lenkstockmodul und Kraftfahrzeug dar.

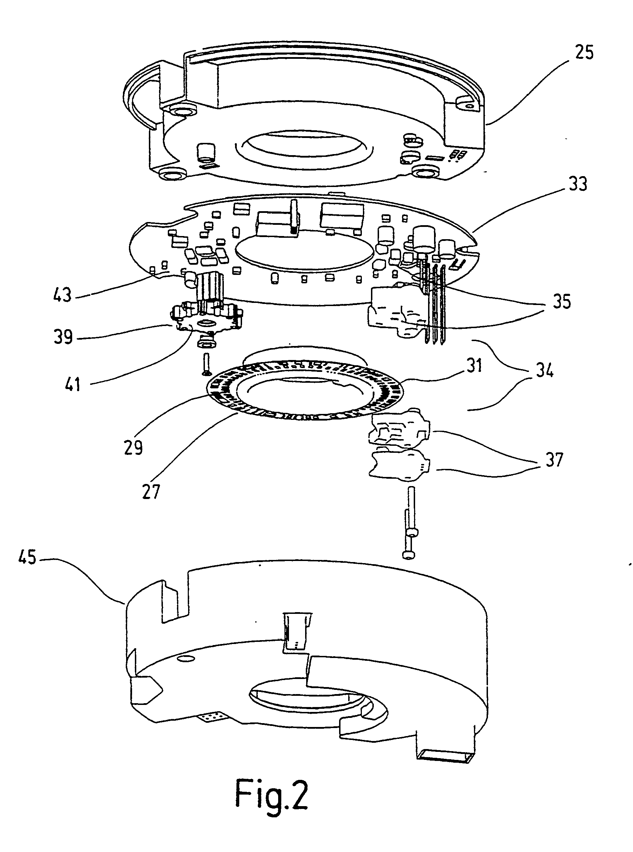

In Fig. 2 ist der Lenkwinkelsensor 3 in einer Explosionsdarstellung abgebildet. Eine drehbar in einem Träger 25 des Lenkwinkelsensors 3 gelagerte Codescheibe 27 weist eine Inkrementalspur 29 und eine Codespur 31 auf. Die Codescheibe 27 ist beispielsweise eine Lochscheibe.

In zusammengebautem Zustand greift der in Fig. 1 dargestellte Zapfen 16 in eine nicht dargestellte Ausnehmung der Codescheibe 27 und überträgt somit die Lenkbewegung des Lenkrads auf die Codescheibe 27. Die Ausnehmung kann ein sich in radialer Richtung erstreckendes Langloch sein, das die Drehbewegung des Zapfens 16 in tangentialer Richtung spielfrei überträgt und das in radialer Richtung Rundlauffehler der Lenksäule 5, der Signalübertragungskassette 1 oder des Lenkrads ausgleicht. Zusätzlich wird die Genauigkeit der Drehwinkelmessung dadurch verbessert, dass die Codescheibe, in Richtung der Längsachse der Lenksäule gesehen, näher an der Lagerung der Lenksäule im Mantelrohr angeordnet ist.

Auf einer Leiterplatte 33 des Lenkwinkelsensors 3 ist eine Abtasteinrichtung 34 dargestellt, die im wesentlichen aus einem Sender 35 mit beispielsweise 4 Leuchtdioden und einem Empfänger 37 mit beispielsweise 4 Transistoren besteht. In zusammengebautem Zustand strahlt der Sender 35 Licht durch die Löcher der Codescheibe 27 zum Empfänger 37. Durch die Anordnung der Löcher in der Inkrementalspur 29 und der Codespur 31 der Codescheibe 27 wird der Lenkwinkel über eine Lenkradumdrehung von 360° bestimmt.

Eine Umdrehungserkennung 39 ermittelt die Zahl der Lenkradumdrehungen. Dabei wird ein mit einem Magnet versehenes Zahnrad 41 einmal pro Umdrehung von der Codescheibe 27 mitgenommen. Unter dem Zahnrad 41 befinden sich 6 Hall-Elemente 43, von denen immer eines geschaltet ist. Mit 6 Hall-Elementen lassen sich somit sechs Lenkradumdrehungen eindeutig bestimmen. Auf der Leiterplatte 33 sind die erste und die zweite Auswerteelektronik andeutungsweise dargestellt. Da die erste und die zweite Auswerteelektronik nicht erkennbar räumlich getrennt dargestellt sind, wurde auf die Vergabe von Bezugszeichen verzichtet.

Mit einem Gehäuse 45 wird der Lenkwinkelsensor 3 vor äußeren Einflüssen geschützt.

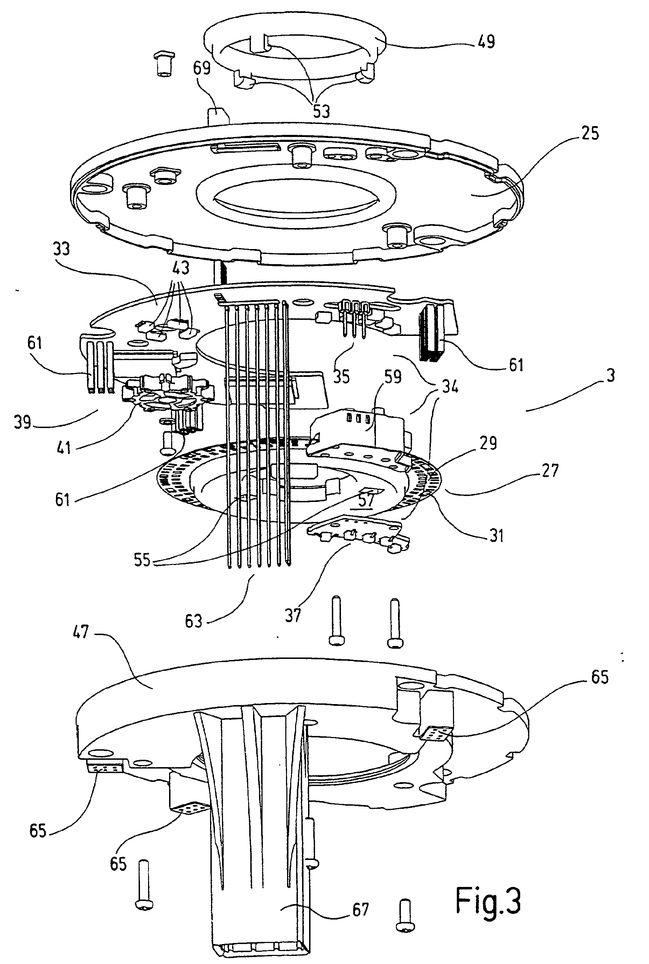

In Fig. 3 ist eine weitere Ausführungsform eines erfindungsgemäßen Lenkwinkelsensors 3 in einer Explosionsdarstellung abgebildet. Bezüglich übereinstimmender Merkmale wird auf die Fig. 1 und 2 sowie deren Beschreibung Bezug genommen.

Die Codescheibe 27 ist drehbar in einem Gehäuse 47 des Lenkwinkelsensors 3 gelagert. Die Lagerung besteht aus einem Lagerring 49 und einer entsprechenden Bohrung 51 in dem Gehäuse 47. Der Lagerring weist drei hakenförmige Vorsprünge 53 auf, die in zusammengebautem Zustand in entsprechende Ausnehmungen 55 der Codescheibe 27 oder eines Lagerstücks 57 lösbar oder unlösbar einrasten.

Auf der Leiterplatte 33 ist eine Abtasteinrichtung 34 dargestellt, die im wesentlichen aus einem Sender 35 mit beispielsweise 5 Leuchtdioden und einem Empfänger 37 mit beispielsweise 5 Transistoren besteht. Zwischen Sender 35 und Empfänger 37 ist eine Abdeckung 59 angeordnet, die Streulicht von der Abtasteinrichtung 34 fernhält und den Sender 35 trägt.

Die Umdrehungserkennung 39 weist 4 Hall-Elemente 43 auf, von denen immer eines geschaltet ist. Auf der Leiterplatte 33 sind außerdem Steckerstifte 61 und 63 dargestellt. Die Steckerstifte 61 kontaktieren in montiertem Zustand ersten, zweiten und dritten Lenkstockschalter 6, 7, und 9, während die Steckerstifte 63 das Lenkstockmodul mit dem Kraftfahrzeug kontaktieren.

An dem Gehäuse 45 sind Steckergehäuse 65 und 67 angeordnet, die in zusammengebautem Zustand des Lenkwinkelsensors 3 die Steckerstifte 61 und 63 aufnehmen, so dass sich komplette Kontaktstecker ergeben. An dem Träger 25 ist ein Kontaktstecker 69 angeordnet, der in zusammengebautem Zustand des Lenkwinkelsensors 3 die Signalübertragungskassette 1 mit dem Lenkwinkelsensor 3 kontaktiert.

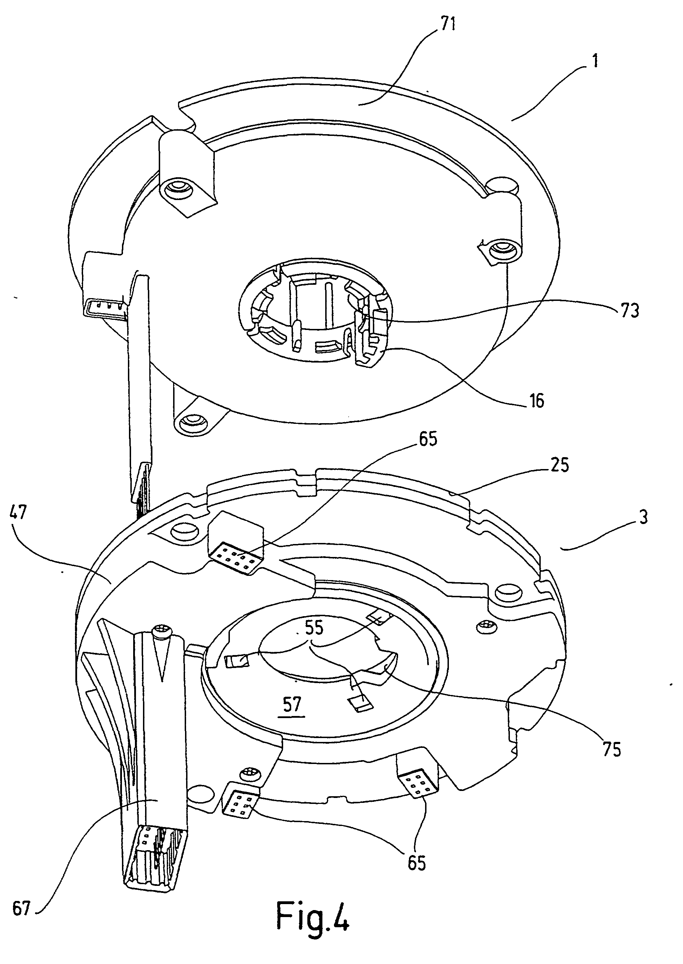

In Fig. 4 sind Signalübertragungskassette 1 und Lenkwinkelsensor 3 dargestellt. In dieser Darstellung ist das drehende Teil 71 der Signalübertragungskassette 1 zu erkennen. Es wird mit seiner Bohrung 73 über die in Fig. 4 nicht dargestellte Lenksäule geschoben und dreht sich mit der Lenksäule. Der Zapfen 16 des drehenden Teils 71 greift, wenn die Signalübertragungskassette 1 auf den Lenkwinkelsensor 3 geschoben wird, in eine Ausnehmung 75 des Lagerstücks 57 der Codescheibe 27. Dabei erfolgt die Übertragung der Lenkbewegung zwischen Signalübertragungskassette 1 und Lenkwinkelsensor 3 spielfrei. In radialer und axialer Richtung kann der Zapfen 16 sich relativ zu der Ausnehmung 73 der Codescheibe 27 bewegen.

In Fig. 4 ist auch zu erkennen, dass Steckerstifte 77 in zusammengebautem Zustand die elektrische Verbindung zwischen Signalübertragungskassette 1 einerseits und Lenkwinkelsensor 3 und Kraftfahrzeug andererseits herstellen.

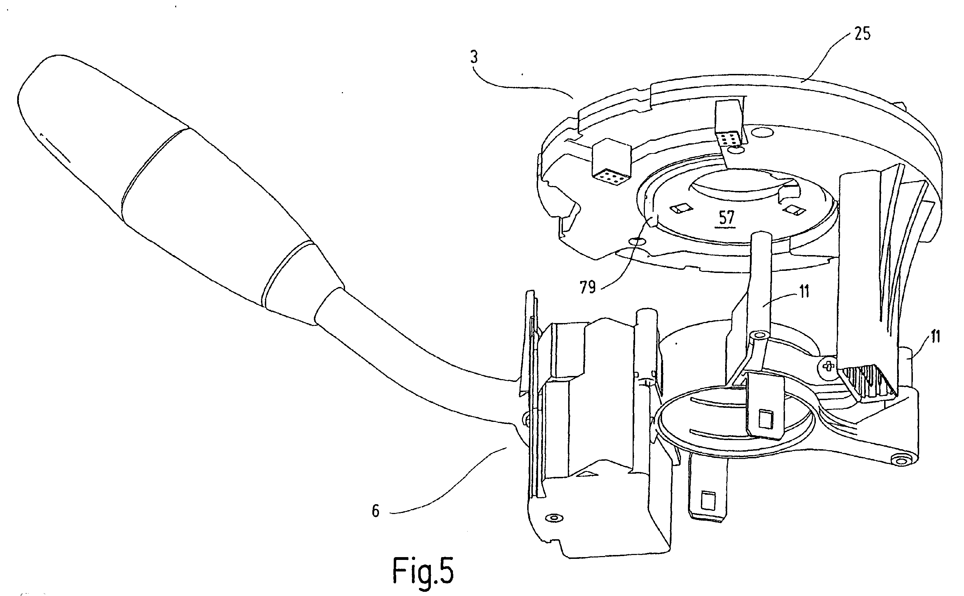

Fig. 5 zeigt den Lenkwinkelsensor 3 und den Lenkstockschalter 6, mit dem die Blinker betätigt werden. Die Lagerung der Codescheibe 27 in dem Träger 25 mittels Lagerring 49 und Lagerstück 57 ist in dieser Darstellung zu erkennen. Das Lagerstück weist einen Stift 79 auf, der in Richtung des ersten Lenkstockschalters 6 über die Codescheibe 27 und den Lenkwinkelsensor 3 hinausragt. In zusammengebautem Zustand betätigt der Stift 79 einen in dieser Darstellung nicht erkennbaren Rückstellnocken des ersten Lenkstockschalters 6 und stellt somit den ersten Lenkstockschalter zurück. Dadurch wird das Blinken des Kraftfahrzeugs beendet.

## Patentansprüche

1. Lenkstockmodul für Kraftfahrzeuge mit einer Signalübertragungskassette (1) zur Übertragung von Informationen und/oder elektrischen Strömen zwischen einem Lenkrad und dem Kraftfahrzeug, mit einem, eine erste Auswerteelektronik aufweisenden Lenkwinkelsensor (3), mit mindestens einem Lenkstockschalter (6, 7, 9) und mit mindestens einer zweiten Auswerteelektronik für die Signalübertragungskassette (1) und/oder den oder die Lenkstockschalter (6, 7, 9), wobei die erste Auswerteelektronik und die zweite Auswerteelektronik räumlich benachbart angeordnet sind, und wobei die Signalübertragungskassette (1) einen mit einem Lenkrad des Kraftfahrzeugs drehbaren Teil aufweist, wobei der Lenkwinkelsensor (3) eine in dem Lenkwinkelsensor (3) drehbar gelagerte Codescheibe (27) aufweist, und wobei die Codescheibe (27) drehfest mit dem drehbaren Teil der Signalübertragungskassette (1) verbunden ist, **dadurch kennzeichnet, dass** die Signalübertragungskassette ein Breitbandkabel aufweist, wobei das Breitbandkabel Informationen und/oder elektrische Ströme von einem Lenkrad zu dem Kraftfahrzeug und umgekehrt überträgt, und die erste Auswerteelektronik und die zweite Auswerteelektronik auf einer gemeinsamen Platine (33) angeordnet sind.

2. Lenkstockmodul nach Anspruch 1 **dadurch gekennzeichnet, dass** die erste Auswerteelektronik und die zweite Auswerteelektronik zwischen Signalübertragungskassette (1) und Lenkstockschalter (6, 7, 9) angeordnet sind.

3. Lenkstockmodul nach Anspruch 1 oder 2 **dadurch gekennzeichnet, dass** die erste Auswerteelektronik und die zweite Auswerteelektronik in den Lenkwinkelsensor (3) integriert sind.

4. Lenkstockmodul nach einem der vorhergehenden Ansprüche, **dadurch gekennzeichnet, dass** zwischen Signalübertragungskassette (1) und zweiter Auswerteelektronik eine elektrische Steckverbindung (69) vorhanden ist.

5. Lenkstockmodul nach einem der vorhergehenden Ansprüche, **dadurch gekennzeichnet, dass** zwischen dem oder den Lenkstockschaltern (6, 7,9) und zweiter Auswerteelektronik je eine elektrische Steckverbindung (61, 65) vorhanden ist.

6. Lenkstockmodul nach einem Ansprüche 1 bis 4, **dadurch gekennzeichnet, dass** zwischen dem oder den Lenkstockschaltern (6, 7,9) und zweiter Auswerteelektronik eine gemeinsam elektrische Steckverbindung (61, 65) vorhanden ist.

7. Lenkstockmodul nach einem der vorhergehenden Ansprüche, **dadurch gekennzeichnet, dass** der Lenkwinkelsensor (3) räumlich zwischen Signalübertragungskassette (1) und Lenkstockschalter (6, 7, 9) angeordnet ist.

8. Lenkstockmodul nach einem der vorhergehenden Ansprüche, **dadurch gekennzeichnet, dass** der erste Lenkstockschalter (6) zur Blinkerbetätigung dient, dass der erste Lenkstockschalter (6) eine Blinkerrückstellung aufweist, und dass die Blinkerrückstellung von dem Lenkwinkelsensor (3) steuerbar ist.

## Claims

1. Steering column module for motor vehicles, having a signal transmission cassette (1) for transmitting information and/or electrical currents between a steering wheel and the motor vehicle, with a steering angle sensor (3) having a first evaluating electronics unit, with at least one steering column switch (6, 7, 9) and with at least one second evaluating electronics unit for the signal transmission cassette (1) and/or for the steering column switch or switches (6, 7, 9), wherein the first evaluating electronics unit and the second evaluating electronics unit are arranged spatially adjacent, and wherein the signal transmission cassette (1) has a member which is rotatable with a steering wheel of the vehicle, wherein the steering angle sensor (3) has an encoder disk (27) rotatably mounted in the steering angle sensor (3), and wherein the encoder disk (27) is fixed in twist-proof manner to the rotatable member of the signal transmission cassette (1), **characterised in that** the signal transmission cassette has a broadband cable, wherein the broadband cable transmits information and/or electrical currents from a steering wheel to the motor vehicle and vice versa, and the first evaluating electronics unit and the second evaluating electronics unit are arranged on a common circuit board (33).

2. Steering column module according to claim 1, **characterised in that** the first evaluating electronics unit and the second evaluating electronics unit are arranged between the signal transmission cassette (1) and the steering column switch (6, 7, 9).

3. Steering column module according to claim 1 or 2, **characterised in that** the first evaluating electronics unit and the second evaluating electronics unit are integrated into the steering angle sensor (3).

4. Steering column module according to one of the preceding claims, **characterised in that** an electrical plug connection (69) is provided between the signal transmission cassette (1) and the second evaluating electronics unit.

5. Steering column module according to one of the preceding claims, **characterised in that** an electrical plug connection (61, 65) is provided, in each case, between the steering column switch or switches (6, 7, 9) and the second evaluating electronics unit.

6. Steering column module according to one of the claims 1 to 4, **characterised in that** a common electrical plug connection (61, 65) is provided between the steering column switch or switches (6, 7, 9) and the second evaluating electronics unit.

7. Steering column module according to one of the preceding claims, **characterised in that** the steering angle sensor (3) is arranged spatially between the signal transmission cassette (1) and the steering column switches (6, 7, 9).

8. Steering column module according to one of the preceding claims, **characterised in that** the first steering column switch (6) serves for indicator actuation, that the first steering column switch (6) has an indicator reset, and that the indicator reset is controllable by the steering angle sensor (3).

## Revendications

1. Module de colonne de direction pour véhicules automobiles comprenant une cassette de transmission de signal (1) pour la transmission d'informations et/ou de courants électriques entre un volant et le véhicule, avec un capteur d'angle de braquage présentant une première électronique d'analyse, avec au moins un interrupteur de colonne de direction (6, 7, 8) et avec au moins une seconde électronique d'analyse pour la cassette de transmission de signal (1) et/ou le ou les interrupteurs de colonne de direction (6, 7, 9), la première électronique d'analyse et la seconde électronique d'analyse étant disposées à proximité dans l'espace, et la cassette de transmission de signal (1) présentant une partie tournée avec un volant du véhicule, le capteur d'angle de braquage (3) présentant un disque de code (27) logé de façon rotative dans le capteur d'angle de braquage (3), et le disque de code (27) étant relié de façon solidaire en rotation à la partie rotative de la cassette de transmission de signal (1), **caractérisé en ce que** la cassette de transmission de signal présente un câble à large bande, le câble à large bande transmettant des informations et/ou des courants électriques d'un volant au véhicule et inversement, et la première électronique d'analyse et la seconde électronique d'analyse sont disposées sur une platine (33) commune.

2. Module de colonne de direction selon la revendication 1, **caractérisé en ce que** la première électronique d'analyse et la seconde électronique d'analyse sont disposées entre la cassette de transmission de signal (1) et l'interrupteur de colonne de direction (6, 7, 9).

3. Module de colonne de direction selon la revendication 1 ou 2, **caractérisé en ce que** la première électronique d'analyse et la seconde électronique d'analyse sont intégrées dans le capteur d'angle de braquage (3).

4. Module de colonne de direction selon l'une quelconque des revendications précédentes, **caractérisé en ce qu'**une liaison à fiche (69) électrique est présente entre la cassette de transmission de signal (1) et la seconde électronique d'analyse.

5. Module de colonne de direction selon l'une quelconque des revendications précédentes, **caractérisé en ce qu'**une liaison à fiche (61, 65) électrique est présente entre le ou les interrupteurs de colonne de direction (6, 7, 9) et la seconde électronique d'analyse.

6. Module de colonne de direction selon l'une quelconque des revendications 1 à 4, **caractérisé en ce qu'**une liaison à fiche (61, 65) électrique commune est présente entre le ou les interrupteurs de colonne de direction (6, 7, 9) et la seconde électronique d'analyse.

7. Module de colonne de direction selon l'une quelconque des revendications précédentes, **caractérisé en ce que** le capteur d'angle de braquage (3) est disposé dans l'espace entre la cassette de transmission de signal (1) et l'interrupteur de colonne de direction (6, 7, 9).

8. Module de colonne de direction selon l'une quelconque des revendications précédentes, **caractérisé en ce que** le premier interrupteur de colonne de direction (6) sert à l'actionnement du clignotant, **en ce que** le premier interrupteur de colonne de direction (6) présente un rappel automatique du retour de clignotant et **en ce que** le rappel automatique du clignotant peut être commandé par le capteur d'angle de braquage (3).
